(19) Europäisches Patentamt / European Patent Office / Office européen des brevets

(11) **EP 4 564 453 A2**

(12) **EUROPEAN PATENT APPLICATION**

(43) Date of publication:
04.06.2025 Bulletin 2025/23

(21) Application number: 24216683.3

(22) Date of filing: 29.11.2024

(51) International Patent Classification (IPC):
*H01M 4/133* (2010.01)    *H01M 4/587* (2010.01)
*H01M 4/62* (2006.01)

(52) Cooperative Patent Classification (CPC):
H01M 4/133; H01M 4/587; H01M 4/623;
H01M 4/625; H01M 2004/021; H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.11.2023 KR 20230171127

(71) Applicants:
• SK On Co., Ltd.
Seoul 03161 (KR)
• SK Innovation Co., Ltd.
Seoul 03188 (KR)

(72) Inventors:
• PARK, Gwi Ok
34124 Daejeon (KR)
• KIM, Hyo Mi
34124 Daejeon (KR)
• KWON, Bob Jin
34124 Daejeon (KR)
• YANG, Young Mo
34124 Daejeon (KR)
• YU, Do Ae
34124 Daejeon (KR)
• CHUNG, Dong Jae
34124 Daejeon (KR)
• CHOI, Wan Uk
34124 Daejeon (KR)

(74) Representative: Stolmár & Partner
Patentanwälte PartG mbB
Blumenstraße 17
80331 München (DE)

(54) **ANODE FOR LITHIUM SECONDARY BATTERY AND LITHIUM SECONDARY BATTERY INCLUDING THE SAME**

(57) An anode for a lithium secondary battery includes an anode current collector, and an anode active material layer disposed on at least one surface of the anode current collector. The anode active material layer includes an anode active material and a conductive material. An electrode peak intensity ratio obtained by a pair distribution function (PDF) analysis of the anode active material layer is in a range from 1.1 to 2.7.

FIG. 1

EP 4 564 453 A2

**Description**

TECHNICAL FIELD

The disclosure of this patent application relates to an anode for a lithium secondary battery and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

Recently, as an application range of the lithium secondary battery is expanded, the lithium secondary battery having higher capacity and power is being developed. For example, silicon having high capacity can be combined with carbon to be used as an anode active material.

However, an anode containing a silicon-carbon composite anode active material have an increased volume expansion ratio to result in a reduction of life-span properties during repeated charge and discharge.

SUMMARY

According to an aspect of the present disclosure, there is provided an anode for a lithium secondary battery having improved life-span and power properties.

According to an aspect of the present disclosure, there is provided a lithium secondary battery having improved life-span and power properties.

An anode for a lithium secondary battery includes an anode current collector, and an anode active material layer disposed on at least one surface of the anode current collector. The anode active material layer includes an anode active material and a conductive material. An electrode peak intensity ratio of the anode active material layer defined by Equation 1 is in a range from 1.1 to 2.7.

$$[\text{Equation 1}]$$

$$\text{electrode peak intensity ratio} = Ip2/Ip1$$

In Equation 1, Ip1 is a maximum height of a peak in a range of 3.4 Å to 4.1 Å of a pair distribution function (PDF) spectrum obtained by a PDF analysis of the anode active material layer, and Ip2 is a maximum height of a peak in a range of 4.1 Å to 4.9 Å of the PDF spectrum.

In some embodiments, the electrode peak intensity ratio may be in a range from 2.13 to 2.64.

In some embodiments, the anode active material includes a composite particle that may include a carbon-based particle including pores, and a silicon-containing coating formed on a surface of the carbon-based particle.

In some embodiments, a particle peak distance of the composite particle defined by Equation 2 may be 0.6 Å or less.

$$[\text{Equation 2}]$$

$$\text{particle peak distance (Å)} = p4\text{-}p3$$

In Equation 2, p3 is a central peak value of a peak having a maximum height in a range from 3.4 Å to 4.1 Å of the PDF spectrum obtained by the PDF analysis for the composite particle, and p4 is a central peak value of a peak having a maximum height in a range of 4.1 Å to 4.9 Å of the PDF spectrum obtained by the PDF analysis for the composite particle.

In some embodiments, the particle peak distance may be in a range from 0.56 Å to 0.59 Å.

In some embodiments, a particle peak intensity ratio of the composite particle defined by Equation 3 may be in a range from 0.1 to 0.35.

[Equation 3]

$$\text{particle peak intensity ratio} = Ip4/Ip3$$

In Equation 3, Ip3 is a maximum height of a peak in a range from 3.4 Å to 4.1 Å of the PDF spectrum obtained by the PDF analysis for the composite particle, and Ip4 is a maximum height of a peak in a range from 4.1 Å to 4.9 Å of the PDF spectrum obtained by the PDF analysis for the composite particle.

In some embodiments, the particle peak intensity ratio may be in a range from 0.15 to 0.28.

In some embodiments, a pore size of the carbon-based particle may be in a range from 0.1 nm to 10 nm.

In some embodiments, a pore size of the carbon-based particle may be in a range from 1 nm to 5 nm.

In some embodiments, the composite particle may further include a carbon coating formed on the silicon-containing coating.

In some embodiments, a content of the composite particle may be in a range from 5 wt% to 40 wt% based on a total weight of the anode active material layer.

In some embodiments, a content of the composite particle may be in a range from 10 wt% to 30 wt% based on a total weight of the anode active material layer.

In some embodiments, the anode active material may further include a graphite-based active material including at least one selected from the group consisting of artificial graphite and natural graphite.

In some embodiments, the conductive material may include a single-walled carbon nanotube (SWCNT).

A lithium secondary battery includes the above-described anode for a lithium secondary battery, and a cathode facing the anode.

According to an embodiment of the present disclosure, power and life-span properties of a secondary battery may be improved.

According to an embodiment of the present disclosure, physical and chemical stability of a composite particle may be improved.

According to an embodiment of the present disclosure, a capacity retention of a secondary battery may be improved.

The anode and the lithium secondary battery according to the present disclosure may be widely applied in green technology fields such as an electric vehicle, a battery charging station, a solar power generation, a wind power generation, etc., using a battery, etc. The anode and the lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

FIG. 1 is a schematic cross-sectional view illustrating a composite particle in accordance with example embodiments.
FIG. 2 and FIG. 3 are a schematic plan view and a schematic cross-sectional view, respectively, illustrating a lithium secondary battery in accordance with example embodiments.
FIG. 4 is a pair distribution function (PDF) spectrum graph obtained by a PDF analysis of Example 3.
FIG. 5 is a PDF spectrum graph obtained by a PDF analysis of Comparative Example 1.
FIG. 6 is a PDF spectrum graph obtained by a PDF analysis of Comparative Example 3.

DETAILED DESCRIPTION OF THE EMBODIMENTS

According to embodiments disclosed in the present application, an anode for a lithium secondary battery (hereinafter, that may be abbreviated as an anode) including an anode active material layer. According to embodiments of the present disclosure, a lithium secondary battery including the anode is also provided.

In example embodiments, the anode includes an anode current collector, and an anode active material layer being disposed on at least one surface of the anode current collector and including an anode active material and a conductive material.

For example, the anode current collector may include a copper foil, a nickel foil, a stainless steel foil, a titanium foil, a nickel foam, a copper foam, a polymer substrate coated with a conductive metal, etc. These may be used alone or in a combination of two or more therefrom. For example, a thickness of the anode current collector may be in a range from 10 μm to 50 μm.

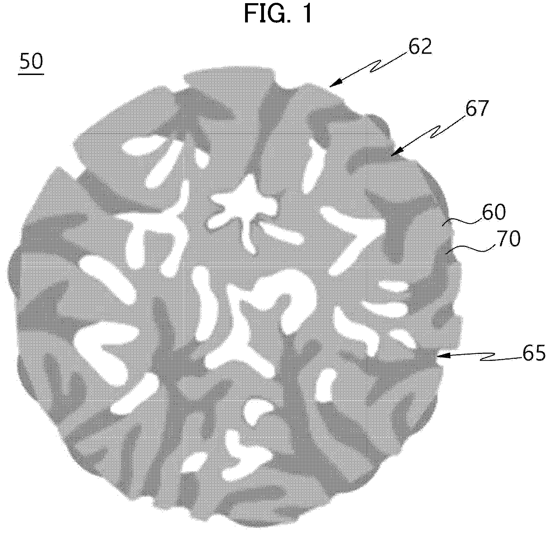

In example embodiments, the anode active material may include a composite particle including a carbon-based particle and a silicon (Si)-containing coating. A detailed construction of the composite particle will be described later with reference to FIG. 1. For example, the anode active material may include a plurality of the composite particles.

In some examples, the anode active material may include the composite particles and a graphite-based active material. For example, the graphite-based active material may include artificial graphite and/or natural graphite.

A content of the composite particles based on a total weight of the anode active material (e.g., a total weight of the plurality of the composite particles and the graphite-based active material) may be 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more.

The content of the composite particles based on the total weight of the anode active material may be 90 wt% or less, 85 wt% or less, 80 wt% or less, 75 wt% or less, 70 wt% or less, 65 wt% or less, 60 wt% or less, 55 wt% or less, or 50 wt% or less.

In an embodiment, the anode active material may substantially consist of the composite particles and the graphite-based active material.

In example embodiments, an electrode peak intensity ratio defined by Equation 1 of the anode active material layer is in a range from 1.1 to 2.7. In some embodiments, the electrode peak intensity ratio may be in a range from 2.13 to 2.64. The electrode peak intensity ratio is measured through a pair distribution function (PDF) analysis.

[Equation 1]

$$\text{electrode peak intensity ratio} = \text{Ip2}/\text{Ip1}$$

In Equation 1, Ip1 is a maximum height of a peak in a range of 3.4 Å to 4.1 Å of a PDF spectrum obtained by the PDF analysis of the anode active material layer, and Ip2 is a maximum height of a peak in a range of 4.1 Å to 4.9 Å of the PDF spectrum.

For example, the electrode peak intensity ratio may correspond to a degree of dispersion of PDF spectrum peaks of carbon atoms and silicon atoms included in the anode active material layer.

In the range of the electrode peak intensity ratio, crystallinity and amorphousness of a carbon component (e.g., the carbon-based particle and/or the graphite-based active material) and a silicon component of the anode active material layer may be adjusted. Accordingly, power and life-span properties of the secondary battery may be improved.

Scattering data for the PDF analysis may be collected, e.g., from a beamline 1C of Pohang Light Source (PLS-II) of Pohang Accelerator Research Institute (PAL). In addition to the beamline 1C, another equipment capable of measuring the scattering data may also be used.

For example, an anode sample including the anode active material layer may be fixed, and the scattering data may be measured by performing a 2D scan with 0.017 degrees of a step size in a range of 5 to 80 degrees (2θ) using a high energy X-ray (22.003 KeV) having a wavelength (λ) of 0.56356 Å. The scattering data may include a 2D scattering image.

1D scattering intensity data may be obtained by integrating the 2D scattering image using a software (e.g., Dioptas). In the process of obtaining the 1D scattering intensity data, when the current collector and the composite particles 50 are adhered to each other, a diffraction peak of the current collector may be planarized.

For example, a background data may be obtained by collecting X-rays scattered in an atmosphere.

For example, the 1D scattering intensity data, the background data, the used wavelength and chemical composition may be applied to a software (e.g., PDFgetX3) to obtain a structural function S(Q). In this case, a relative intensity (background scale) of the background data relative to the 1D scattering intensity data may be set to 1.0, and a range of Q may be set to 0.1 to 12.0.

A G(r) function may be obtained by a Fourier transform of S(Q). The PDF spectrum may be obtained by illustrating a change in G(r) according to an interatomic distance (r).

p1 and p2 of Equation 1 may be measured by drawing a baseline parallel to a horizontal axis (r) based on the lowest vertical axis G(r) height in a range of r from 0 Å to 6 Å of the PDF spectrum, and then deriving a central peak value of a peak having a maximum height based on the baseline.

In some embodiments, after a formation charge/discharge of the secondary battery including the anode, the secondary battery was discharged to 2.2 V, and then the second battery is disassembled to obtain the anode active material layer. The electrode peak intensity ratio may be measured using the obtained anode active material layer. Accordingly, physical properties of the actually operated anode active material may be measured.

FIG. 1 is a schematic cross-sectional view illustrating a composite particle in accordance with example embodiments.

FIG. 1 illustrates a schematic shape of the composite particles for convenience of descriptions, but the structure/shape of the composite particle of the present disclosure is not limited to that illustrated in FIG. 1. For example, a cross-section of the carbon-based particle may be randomly changed from a circular shape. Additionally, the silicon-containing coating may be partially formed on pores and a surface of the carbon-based particle, or may be formed as a plurality of discontinuous islands or patterns.

Referring to FIG. 1, as described above, a composite particle 50 may include a carbon-based particle 60 and a silicon-containing coating 70.

According to embodiments of the present disclosure, the carbon-based particle 60 may include a pore 65. For example, the carbon-based particles 60 may be a porous particle including a plurality of pores.

In some embodiments, the carbon-based particle 60 may include an activated carbon, a carbon nanotube, a carbon nanowire, graphene, a carbon fiber, carbon black, graphite, a porous carbon, a pyrolyzed cryogel, a pyrolyzed xerogel, a pyrolyzed aerogel, etc. These may be used alone or in a combination of two or more therefrom.

In some embodiments, the carbon-based particle 60 may include an amorphous structure or a crystalline structure.

In an embodiment, the carbon-based particle 60 may include the amorphous structure. In this case, durability of the anode active material may be increased, so that cracks may be suppressed during charging and discharging or an external impact. Accordingly, the life-span properties of the secondary battery may be improved.

The silicon-containing coating 70 may be formed on a surface of the carbon-based particle 60 including the pores 65. For example, volume expansion of silicon contained in the silicon-containing coating 70 may be alleviated by the pores 65. Accordingly, cracks due to a difference between volume expansion ratios of carbon (e.g., about 150 volume% or less) and silicon (e.g., about 400 volume% or more) during charging and discharging of the battery may be prevented while employing the relatively high capacity properties of silicon.

Thus, gas generation due to a side reaction between the anode active material and an electrolyte solution may be prevented, and the life-span properties of the secondary battery may be improved.

The pores 65 of the carbon-based particle 60 may have a shape indented into the carbon-based particle 60 from an outermost portion of the carbon-based particle 60 to an inside of the carbon-based particle 60. For example, the pores 65 may include open pores to an outside of the carbon-based particles 60.

As used herein, the term "a surface of the carbon-based particles" and/or "a surface of the carbon-based particle 60" may refer to an outer surface 62 of the carbon-based particle 60, an inner surface 67 of the pore 65, or the outer surface 62 of the carbon-based particle 60 and the inner surface 67 of the pore 65.

For example, the silicon-containing coating 70 may be formed on at least a portion of the outer surface 62 of the carbon-based particle 60.

For example, the silicon-containing coating 70 may be formed on at least a portion of the inner surface 67 of the pore 65 of the carbon-based particles 60.

For example, the silicon-containing coating 70 may be formed on at least a portion of the outer surface 62 of carbon-based particle 60 and at least a portion of the inner surface 67 of pore 65.

In some embodiments, the silicon-containing coating 70 may include an amorphous silicon. Accordingly, stability of the composite particle may be improved and the life-span properties of the secondary battery may be improved.

In an embodiment, the silicon-containing coating 70 may not include a crystalline silicon. Accordingly, stability of the composite particle may be further improved and the life-span properties of the secondary battery may be further improved.

In some embodiments, a peak distance measured by the PDF analysis of the composite particle 50 and defined by Equation 2 below may be 0.6 Å or less, and, in some embodiments, may be in a range from 0.56 Å to 0.59 Å or from 0.57 Å to 0.59 Å.

[Equation 2]

$$\text{particle peak distance (Å)} = p4\text{-}p3$$

In Equation 2, p3 is a central peak value of a peak having a maximum height in a range from 3.4 Å to 4.1 Å of the PDF spectrum obtained by the PDF analysis for the composite particle 50, and p4 is a central peak value of a peak having a maximum height in a range of 4.1 Å to 4.9 Å of the PDF spectrum obtained by the PDF analysis for the composite particle 50.

For example, the particle peak distance may correspond to a distance between silicon atoms included in the silicon-containing coating 70.

In the particle peak distance range above, the distance between the silicon atoms included in the silicon-containing coating 70 may be maintained at an appropriate level, so that stability and amorphousness of silicon may be enhanced. Accordingly, physical and chemical stability of the composite particle 50 may be improved, and the capacity retention during charging and discharging of the secondary battery may be improved.

In some embodiments, a particle peak intensity ratio measured by the PDF analysis of the composite particle 50 and defined by Equation 3 below may be in a range from 0.1 to 0.35, and in an embodiment, may be in a range from 0.13 to 0.29, or from 0.15 to 0.28.

$$[\text{Equation 3}]$$

$$\text{particle peak intensity ratio} = Ip4/Ip3$$

In Equation 3, Ip3 is a maximum height of a peak in a range from 3.4 Å to 4.1 Å of the PDF spectrum obtained by the PDF analysis for the composite particle 50, and Ip4 is a maximum height of a peak in a range from 4.1 Å to 4.9 Å of the PDF spectrum obtained by the PDF analysis for the composite particle 50.

For example, the particle peak intensity ratio may correspond to a degree of dispersion of the PDF spectrum peak of silicon atoms included in the silicon-containing coating 70.

In the peak intensity ratio range, the silicon atoms may each have an appropriate amorphousness and may be uniformly coated on the surface of the carbon-based particle 60. Accordingly, the life-span properties of the secondary battery may be improved.

In some embodiments, a size of the pore 65 of the carbon-based particle 60 may be in a range from 0.1 nm to 10 nm, from 0.5 nm to 8 nm, or from 1 nm to 5 nm. In the above range, excessive deposition of silicon may be prevented, and cracks of the anode active material during charging and discharging of the secondary battery may be further suppressed.

The size of the pore 65 may refer to a diameter of an entrance of the pore 65 formed on the surface of the carbon-based particle 60.

In some embodiments, the silicon-containing coating 70 may include silicon, and optionally may further include $SiO_x$ (0<x<2).

In an embodiment, the composite particle 50 may not include silicon carbide (SiC). In this case, the capacity and life-span properties of the anode active material may be enhanced.

In some embodiments, the composite particle 50 may further include a carbon coating (not illustrated) formed on the silicon-containing coating 70. Accordingly, a contact between silicon and water in the anode active material may be prevented. Accordingly, a decrease in a discharge capacity and a capacity efficiency of the secondary battery may be prevented in a period from preparation of the anode active material and before formation of the anode.

In some embodiments, the carbon coating may be formed on a portion of the surface of the carbon-based particle 60 where the silicon-containing coating 70 is not formed. For example, the carbon coating may entirely cover the carbon-based particle 60 and the silicon-containing coating 70. Accordingly, mechanical and chemical stability of the anode active material may be improved.

In an embodiment, the carbon coating may include at least one of carbon and a conductive polymer. For example, the carbon may include an amorphous carbon. For example, the conductive polymer may include polyacetylene, polyaniline, polypyrrole, polythiophene, etc.

In some embodiments, a content of the composite particles 50 based on a total weight of the anode active material layer may be in a range from 5 wt% to 40 wt%, or from 10 wt% to 30 wt%. In the above range, the volume expansion of silicon may be reduced, thereby improving the life-span properties of the secondary battery.

The conductive material included in the anode active material layer may include a carbon nanotube.

In some embodiments, the conductive material may include a single-walled carbon nanotube (SWCNT). Accordingly, the power and life-span properties of the secondary battery may be enhanced.

In some embodiments, a content of the conductive material based on the total weight of the anode active material layer may be in a range from 0.05 wt% to 3 wt%, or from 0.1 wt% to 1 wt%. In the above range, a resistance of the anode active material layer may be reduced, and the life-span properties may be effectively improved.

Hereinafter, a preparation method of the above-described composite particle 50 according to example is provided.

In example embodiments, the carbon particle 60 including the pores 65 may be prepared.

In some embodiments, preliminary carbon particles and an additive may be mixed, and then a first firing and washing may be performed to form the carbon-based particles 60.

In an embodiment, the preliminary carbon particles may include at least one selected from the group consisting of glucose, sucrose, cellulose, a petroleum pitch, a coal pitch, a biomass and a resol oligomer.

In some embodiments, the additive may serve as a chemical etchant or a hard template.

In an embodiment, the chemical etchant may include a basic and/or acidic agent such as potassium hydroxide (KOH), potassium acetate, potassium carbonate ($K_2CO_3$), sodium hydroxide (NaOH), sodium carbonate ($Na_2CO_3$), ammonia water ($NH_4OH$), sulfuric acid ($H_2SO_4$). These may be used alone or in a combination of two or more therefrom. For example, a reaction of the above-described preliminary carbon particles and the additive may be performed through a chemical activation method.

In an embodiment, the hard template may include silica, polystyrene, etc. These may be used alone or in a combination of two or more therefrom. The hard template may serve as, e.g., an additive for forming pores. For example, the size of the pores 65 may be controlled according to a particle size of the hard template.

In an embodiment, the first firing may be performed at a temperature in a range from 600 °C to 900 °C. In this range, the size and/or volume of the pores 65 may be appropriately controlled.

In an embodiment, the washing may be performed by adding an acidic solution or an alkaline solution to the mixture. For example, the acidic solution may include a hydrochloric acid (HCl) solution, a sulfuric acid ($H_2SO_4$) solution, etc. For example, the alkaline solution may include a NaOH solution, etc.

In example embodiments, the carbon-based particle 60 and a silicon-containing gas may be co-fired (e.g., a second firing) to form the composite particles 50 including the silicon-containing coating 70 formed on the surface of the carbon-based particles 60. For example, the silicon-containing gas may include a silane gas and an inert gas. For example, the inert gas may include argon (Ar) gas.

In some embodiments, a volume of the silane gas based on a total volume of the silicon-containing gas may be in a range from 10 vol% (volume%) to 70 vol%, from 20 vol% to 70 vol%, from 20 vol% to 50 vol%, or from 30 vol% to 50 vol%. In the above range, a domain size of silicon included in the silicon-containing coating 70 before the heat treatment may be reduced. Accordingly, a crystallite size of silicon after the heat treatment may be reduced.

In some examples, the second firing may be performed at a temperature in a range from 400°C to 600°C. In the above range, the crystallite size of silicon included in the silicon-containing coating 70 before the heat treatment may be reduced. Accordingly, mechanical stability of the anode active material may be improved during the press process or repeated charging and discharging of the secondary battery.

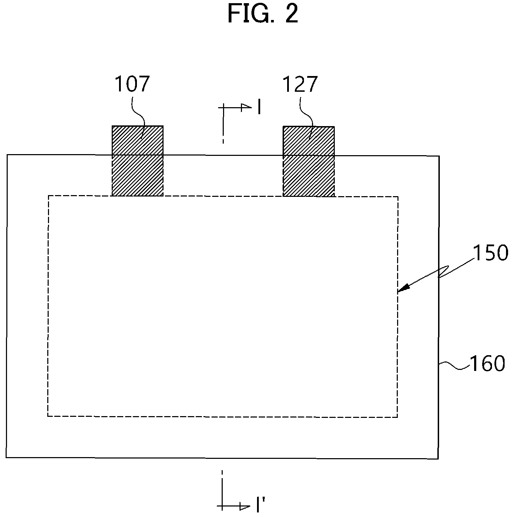

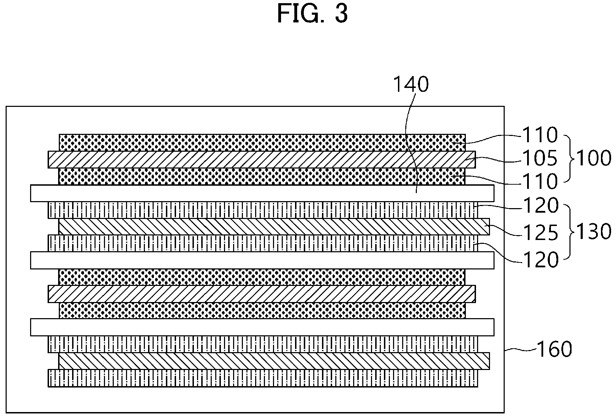

FIGS. 2 and 3 are a schematic plan view and a schematic cross-sectional view, respectively, illustrating a lithium secondary battery in accordance with example embodiments. For example, FIG. 3 is a cross-sectional view taken along a line I-I' of FIG. 2 in a thickness direction.

The lithium secondary battery may include the above-described anode 130 and the cathode 100 facing the anode 130.

The cathode 100 may include a cathode current collector 105 and a cathode active material layer 110 formed on at least one surface of the cathode current collector 105.

The cathode current collector 105 may include stainless steel, nickel, aluminum, titanium, or an alloy thereof. The cathode current collector 105 may include aluminum or stainless steel surface-treated with carbon, nickel, titanium, silver, etc. For example, a thickness of the cathode current collector 105 may be 10 $\mu$m to 50 $\mu$m.

The cathode active material layer 110 may include a cathode active material. The cathode active material may include a compound capable of reversibly intercalating and deintercalating lithium ions.

In example embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Chemical Formula 1.

[Chemical Formula 1]  $\quad Li_xNi_aM_bO_{2+z}$

In Chemical Formula 1, $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Chemical Formula 1 represents a bonding relationship included in the layered structure or the crystal structure of the cathode active material, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-nickel metal oxide particle may include a layered structure or a crystal structure represented by Chemical Formula 1-1.

[Chemical Formula 1-1]  $\quad Li_xNi_aM1_{b1}M2_{b2}O_{2+z}$

In Chemical Formula 1-1, M1 may include Co, Mn and/or Al. M2 may include the above-described auxiliary element. In Chemical Formula 1-1, $0.9 \leq x \leq 1.2$, $0.6 \leq a \leq 0.99$, $0.01 \leq b1 + b2 \leq 0.4$, and $-0.5 \leq z \leq 0.1$.

The cathode active material may further include a coating element or a doping element. For example, elements substantially the same as or similar to the above-described auxiliary elements may be used as the coating element or the doping element. For example, the above-described elements may be used alone or in a combination of two or more therefrom as the coating element or the doping element.

The doping element of the coating element may be present on a surface of the lithium-nickel metal oxide particle, or may penetrate through the surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., , a mole fraction of nickel based on the total number of moles of nickel, cobalt and manganese) may be 0.5 or more, 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., $LiFePO_4$).

In some embodiments, the cathode active material may include a Li-rich layered oxide (LLO)/OLO (Over-Lithiated Oxide)-based active material, a Mn-rich active material, a Co-less-based active material, etc., which may have a chemical structure or a crystal structure represented by Chemical Formula 2 below. These may be used alone or in a combination of two or more therefrom.

[Chemical Formula 2]　　　　　$p[Li_2MnO_3] \cdot (1-p)[Li_qJO_2]$

In Chemical Formula 2, $0 < p < 1$, $0.9 \leq q \leq 1.2$, and J may include at least one element from Mn, Ni, Co, Fe, Cr, V, Cu, Zn, Ti, Al, Mg and B.

For example, the cathode slurry may be prepared by mixing the cathode active material in a solvent. The cathode slurry may be coated on the cathode current collector 105, and then dried and pressed to prepare the cathode active material layer 110. The coating may include, e.g., a gravure coating, a slot die coating, a multi-layered simultaneous die coating, an imprinting, a doctor blade coating, a dip coating, a bar coating, a casting, etc. The cathode active material layer 110 may further include a binder, may optionally further include a conductive material, a thickener, etc.

The solvent may include N-methyl-2-pyrrolidone (NMP), dimethylformamide, dimethylacetamide, N,N-dimethylaminopropylamine, ethylene oxide, tetrahydrofuran, etc.

The binder may include polyvinylidene fluoride (PVDF), vinylidene fluoride-co-hexafluoropropylene copolymer (poly(vinylidene fluoride-co-hexafluoropropylene)), polyacrylonitrile, polymethylmethacrylate, acrylonitrile butadiene rubber (NBR), polybutadiene rubber (BR), styrene-butadiene rubber (SBR), etc. These may be used alone or in a combination of two or more therefrom.

In an embodiment, a PVDF-based binder may be used as the cathode binder. In this case, an amount of the binder for forming the cathode active material layer 110 may be reduced and an amount of the cathode active material may be relatively increased. Accordingly, the power and capacity properties of the secondary battery may be improved.

The conductive material may be used to improve conductivity of the cathode active material layer 110 and/or mobility of lithium ions or electrons. For example, the conductive material may include a carbon-based conductive material such as graphite, carbon black, acetylene black, Ketjen black, graphene, a carbon nanotube, a vapor-grown carbon fiber (VGCF), a carbon fiber and/or a metal-based conductive material such as tin, tin oxide, titanium oxide, a perovskite material including $LaSrCoO_3$ and $LaSrMnO_3$, etc. These may be used alone or in a combination of two or more therefrom.

The cathode slurry may further include a thickener and/or a dispersive agent. In an embodiment, the cathode slurry may include the thickener such as carboxymethyl cellulose (CMC).

As described above, the anode 130 may include an anode current collector 125, and an anode active material layer 120 formed on at least one surface of the anode current collector 125.

The anode active material and the conductive material may be mixed with a solvent to prepare an anode slurry.

The anode slurry may be coated or deposited on the anode current collector 125, and then dried and pressed to form the anode active material layer 120. The coating may include a gravure coating, a slot die coating, a multi-layered simultaneous die coating, an imprinting, a doctor blade coating, a dip coating, a bar coating, a casting, etc. The anode active material layer 120 may further include a binder, and may optionally further include a conductive material, a thickener, etc.

The solvent included in the anode slurry may include water, pure water, deionized water, distilled water, ethanol, isopropanol, methanol, acetone, n-propanol, t-butanol, etc. These may be used alone or in a combination of two or more therefrom.

The above-described materials used in the fabrication of the cathode 100 may also be used as the binder and thickener.

In some embodiments, a styrene-butadiene rubber (SBR)-based binder, carboxymethyl cellulose (CMC), a polyacrylic acid-based binder, a poly(3,4-ethylenedioxythiophene (PEDOT)-based binder, etc., may be used as the anode binder. These may be used alone or in a combination of two or more therefrom.

In example embodiments, a separator 140 may be interposed between the cathode 100 and the anode 130. The separator 140 may be included to prevent an electrical short-circuiting between the cathode 100 and the anode 130 while allowing an ion flow. For example, a thickness of the separator may be in a range from 10 $\mu$m to 20 $\mu$m.

For example, the separator 140 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer, etc. These may be used alone or in a combination of two or more therefrom.

The porous non-woven fabric may include a high melting point glass fiber, a polyethylene terephthalate fiber, etc.

The separator 140 may include a ceramic-based material. For example, inorganic particles may be coated on the polymer film or dispersed in the polymer film to improve a heat resistance.

The separator 140 may have a single-layered or a multi-layered structure including the polymer film and/or the non-woven fabric as described above.

In example embodiments, an electrode cell may be defined by the cathode 100, the anode 130 and the separator 140, and a plurality of the electrode cells may be stacked to form an electrode assembly 150 having, e.g., a jelly roll shape. For example, the electrode assembly 150 may be formed by winding, stacking, z-folding, stack-folding, etc., of the separator 140.

The electrode assembly 150 may be accommodated together with an electrolyte solution in a case 160 to define the lithium secondary battery. In example embodiments, a non-aqueous electrolyte solution may be used as the electrolyte solution.

The non-aqueous electrolyte solution may include a lithium salt serving as an electrolyte and an organic solvent. The lithium salt may be represented by, e.g., $Li^+X^-$, and examples of an anion $X^-$ may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$; $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

Examples of the organic solvent include propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution. In this case, the lithium secondary battery may be manufactured in the form of an all-solid-state battery. Additionally, a solid electrolyte layer may be disposed between the cathode 100 and the anode 130 instead of the separator 140.

The solid electrolyte may include a sulfide-based electrolyte. Non-limiting examples of the sulfide-based electrolyte include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z represents Ge, Zn or Ga), $Li_2S-GeS_2$, $Li_2S-SiS_2-Li_3PO_4$, $Li_2S-SiS_2-Li_pMO_q$, (p and q positive numbers, and M represents P, Si, Ge, B, Al, Ga or In), $Li_7-xPS_6-xCl_x$ ($0{\leq}x{\leq}2$), $Li_7-xPS_6-xBr_x$ ($0{\leq}x{\leq}2$), $Li_7-xPS_6-xI_x$ ($0{\leq}x{\leq}2$), etc. These may be used alone or in a combination of two or more therefrom.

In an embodiment, the solid electrolyte may include an oxide-based amorphous solid electrolyte such as $Li_2O-B_2O_3-P_2O_5$, $Li_2O-SiO_2$, $Li_2O-B_2O_3$, $Li_2O-B_2O_3-ZnO$, etc.

As illustrated in FIGS. 2 and 3, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a prismatic shape, a pouch shape or a coin shape.

Example 1

Preparation of carbon-based particle

Pitch and potassium acetate were dry-mixed in a weight ratio of 5:5, and a first firing was performed at 800 °C for 2 hours. The first fired mixture was washed with an excess of 0.5 M HCl aqueous solution to prepare carbon particles including pores. The carbon-based particles were prepared so that a specific volume of the pores of the carbon particles was 0.6 cm$^3$/g.

Formation of silicon-containing coating

A silicon-containing gas including a silane gas and an argon gas was injected into a CVD coater at a flow rate of 50 mL/min to 100 mL/min. A content of the silane gas based on a total volume of the silicon-containing gas was 50 vol%. A temperature was increased to 550°C at a ramping rate of 5°C/min to 20°C/min, and then maintained for about 120 minutes to prepare composite particles including a silicon-containing coating.

The composite particles were prepared so that a silicon content based on a total weight of the composite particles was 45 wt% by weight.

Formation of anode

95.6 wt% of an anode electrode active material mixed (a mixture of 15 wt% of the composite particles and 80.6 wt% of artificial graphite), 0.1 wt% of SWCNT as a conductive material, 2.8 wt% of styrene-butadiene rubber (SBR) as a binder and 1.5 wt% of carboxymethyl cellulose (CMC) as a thickener were mixed to obtain an anode slurry.

The anode slurry was coated on a copper substrate, dried and pressed to obtain an anode.

Fabrication of a lithium half-cell

A lithium half-cell including the anode and using a lithium metal as a counter electrode (cathode) was manufactured.

Specifically, a lithium coin half-cell of a CR2016 (diameter: 20 mm, thickness: 1.6 mm) standard was formed by interposing a separator (polyethylene, thickness: 20 $\mu$m) between the anode and the lithium metal (thickness: 1 mm).

The assembly of the lithium metal/separator/anode was placed in a coin cell plate, and a cap was covered and clamped after injecting an electrolyte solution. In the preparation of the electrolyte solution, a 1 M $LiPF_6$ solution was formed using a mixed solvent of EC/EMC (3:7; volume ratio), and 2.0 vol% of fluoroethylene carbonate (FEC) was added based on a total volume of the electrolyte solution. After the clamping, impregnation was performed for 3 to 24 hours, and then 3 cycles of charge and discharge were performed at 0.1C (charge conditions: CC-CV 0.1C 0.01V 0.01C CUT-OFF, discharge conditions: CC 0.1C 1.5V CUT-OFF).

Fabrication of lithium secondary battery

A cathode slurry was prepared by mixing $LiNi_{0.88}Co_{0.1}Mn_{0.02}O_2$ as a cathode active material, carbon black as a conductive material, and polyvinylidene fluoride (PVDF) as a binder in a weight ratio of 96.5:2:1.5.

The cathode slurry was uniformly coated on an aluminum current collector (thickness: 12 μm), vacuum-dried, and pressed to form a cathode.

The cathode and the anode were notched to a predetermined size, and stacked with a separator (polyethylene, thickness: 13 μm) interposed therebetween to form an electrode cell, and then the tab portions of the cathodes and the anodes were welded. The welded cathode/separator/anode assembly was placed in a pouch, and three sides except for an electrolyte injection side were sealed. A region around with the electrode tab was included in the sealing portion. An electrolyte solution was injected through the electrolyte injection side, the electrolyte injection side was also sealed, and then impregnation was performed for more than 12 hours to obtain a lithium secondary battery.

In the preparation of the electrolyte solution, a 1M $LiPF_6$ solution was prepared using a mixed solvent of EC/EMC/DEC (25/45/30; volume ratio), and 1 wt% of vinylene carbonate (VC), 0.5 wt% of 1,3-propene sultone (PRS), and 0.5 wt% of lithium bis(oxalato)borate (LiBOB) were added based on a total weight of the solution.

A pre-charging was performed for 36 minutes at a current corresponding to 0.25C for the lithium secondary battery. After 1 hour, degassing was performed, aging was performed for more than 24 hours, and then a formation charge/discharge was performed (charge conditions: CC/CV 0.2C 4.2V 0.05C CUT-OFF, discharge conditions: CC 0.2C 2.5V CUTOFF).

Thereafter, a standard charge/discharge was performed (charge conditions: CC/CV 0.5 C 4.2 V 0.05 C CUT-OFF, discharge conditions: CC 0.5 C 2.5 V CUT-OFF).

Examples 2 and 3

An anode, a lithium half-cell and a lithium secondary battery were manufactured by the same method as that in Example 1, except that the content of the silane gas based on the total volume of the silicon-containing gas was changed as shown in Table 1 below.

Example 4

The carbon-based particles on which the silicon-containing coating was formed was introduced into a thermal CVD chamber, and a mixed gas of an ethylene gas and an argon was supplied and heat-treated at less than 600°C to manufacture a composite particle on which a carbon coating was formed on the silicon-containing coating.

An anode, a lithium half-cell and a lithium secondary battery were manufactured by the same method as that in Example except for the above details.

Example 5

An anode, a lithium half-cell and a lithium secondary battery were manufactured by the same method as that in Example 1, except that an equal amount of a silica dispersion having an average particle size of 6 nm was added instead of potassium acetate, and that the washing was performed with a 0.5 M NaOH aqueous solution instead of the HCl aqueous solution.

Example 6

An anode, a lithium half-cell and a lithium secondary battery were manufactured by the same method as that in Example 1, except that an equal amount of a silica dispersion having an average particle size of 3 nm was added instead of potassium acetate, the washing was performed with a 0.5 M NaOH aqueous solution instead of the HCl aqueous solution, and the content of the silane gas based on the total volume of the silicon-containing gas was changed as shown in Table 1 below.

Example 7

An anode, a lithium half-cell and a lithium secondary battery were manufactured by the same method as that in Example 1, except that an equal amount of a silica dispersion having an average particle size of 6 nm was added instead of potassium acetate, a 0.5 MNaOH aqueous solution was used for washing instead of the HCl aqueous solution, and the content of the silane gas based on the total volume of the silicon-containing gas was changed as shown in Table 1 below.

Example 8

An anode, a lithium half-cell and a lithium secondary battery were manufactured by the same method as that in Example 1, except that an anode slurry was obtained by mixing 95.6 wt% of an anode active material of a mixture including 5 wt% of the composite particles and 90.6 wt% of artificial graphite, 0.1 wt% of SWCNT as a conductive material, 2.8 wt% of styrene-butadiene rubber (SBR) as a binder, and 1.5 wt% of carboxymethyl cellulose (CMC) as a thickener.

Example 9

An anode, a lithium half-cell and a lithium secondary battery were manufactured by the same method as that in Example 1, except that an anode slurry was obtained by mixing 95.6 wt% of an anode active material of a mixture including 10 wt% of the composite particles and 85.6 wt% of artificial graphite, 0.1 wt% of SWCNT as a conductive material, 2.8 wt% of styrene-butadiene rubber (SBR) as a binder, and 1.5 wt% of carboxymethyl cellulose (CMC) as a thickener.

Example 10

An anode, a lithium half-cell and a lithium secondary battery were manufactured by the same method as that in Example 1, except that an anode slurry was obtained by mixing 89.5 wt% of an anode active material of a mixture including 30 wt% of the composite particles and 59.5 wt% of artificial graphite, 0.1 wt% of SWCNT as a conductive material, 8.9 wt% of styrene-butadiene rubber (SBR) as a binder, and 1.5 wt% of carboxymethyl cellulose (CMC) as a thickener.

Example 11

An anode, a lithium half-cell and a lithium secondary battery were manufactured by the same method as that in Example 1, except that an anode slurry was obtained by mixing 85.6 wt% of the anode active material of a mixture including 40 wt% of the composite particles and 45.6 wt% of artificial graphite, 0.1 wt% of SWCNT as a conductive material, 12.8 wt% of styrene-butadiene rubber (SBR) as a binder, and 1.5 wt% of carboxymethyl cellulose (CMC) as a thickener.

Example 12

An anode, a lithium half-cell and a lithium secondary battery were manufactured by the same method as that in Example 11, except that 0.1 wt% of multi-walled carbon nanotubes (MWCNTs) were used as a conductive material.

Example 13

An anode, a lithium half-cell and a lithium secondary battery were manufactured by the same method as that in Example 1, except that an anode slurry was obtained by mixing 95.6 wt% of an anode active material of a mixture including 3 wt% of the composite particles and 92.6 wt% of artificial graphite, 0.1 wt% of SWCNT as a conductive material, 2.8 wt% of styrene-butadiene rubber (SBR) as a binder, and 1.5 wt% of carboxymethyl cellulose (CMC) as a thickener.

Example 14

An anode, a lithium half-cell and a lithium secondary battery were manufactured by the same method as that in Example 1, except that an anode slurry was obtained by mixing 95.6 wt% of an anode active material of a mixture including 45 wt% of the composite particles and 50.6 wt% of artificial graphite, 0.1 wt% of SWCNT as a conductive material, 2.8 wt% of styrene-butadiene rubber (SBR) as a binder, and 1.5 wt% of carboxymethyl cellulose (CMC) as a thickener.

Comparative Example 1

An anode, a lithium half-cell and a lithium secondary battery were manufactured by the same method as that in Example 1, except that an equal amount of a silica dispersion having an average particle size of 50 nm was added instead of potassium acetate and washing was performed with a 0.5 M NaOH aqueous solution instead of the HCl aqueous solution.

Comparative Example 2

An anode, a lithium half-cell and a lithium secondary battery were manufactured by the same method as that in Example 1, except that an equal amount of a silica dispersion having an average particle size of 100 nm was added instead of potassium acetate, and washing was performed with a 0.5 M NaOH aqueous solution instead of the HCl aqueous solution.

Comparative Example 3

An anode, a lithium half-cell and a lithium secondary battery were manufactured by the same method as that in Example 1, except that an anode slurry was obtained by mixing 82.7 wt% of an anode active material of a mixture including 50 wt% of the composite particles and 32.7 wt% of artificial graphite, 0.1 wt% of SWCNT as a conductive material, 15.7 wt% of styrene-butadiene rubber (SBR) as a binder, and 1.5 wt% of carboxymethyl cellulose (CMC) as a thickener.

Comparative Example 4

An anode, a lithium half-cell and a lithium secondary battery were manufactured by the same method as that in Example 1, except that an anode slurry was obtained by mixing 79.5 wt% of an anode active material of a mixture including 75 wt% of the composite particles and 4.5 wt% of artificial graphite, 0.1 wt% of SWCNT as a conductive material, 18.9 wt% of styrene-butadiene rubber (SBR) as a binder, and 1.5 wt% of carboxymethyl cellulose (CMC) as a thickener.

Comparative Example 5

An anode, a lithium half-cell and a lithium secondary battery were manufactured by the same method as that in Example 1, except that an anode slurry was obtained by mixing 95.6 wt% of artificial graphite as an anode active material, 0.1 wt% of SWCNT as a conductive agent, 2.8 wt% of styrene-butadiene rubber (SBR) as a binder, and 1.5 wt% of carboxymethyl cellulose (CMC) as a thickener.

Comparative Example 6

An anode, a lithium half-cell and a lithium secondary battery were manufactured by the same method as that in Example 1, except that an anode slurry was obtained by mixing 80.7 wt% of an anode active material of a mixture including 40 wt% of the composite particles and 40.7 wt% of artificial graphite, 5 wt% of carbon black as a conductive material, 12.8 wt% of styrene-butadiene rubber (SBR) as a binder, and 1.5 wt% of carboxymethyl cellulose (CMC) as a thickener.

Experimental Example

(1) Measurement of pore size of carbon-based particles

Pore sizes of the carbon-based particles according to Examples and Comparative Examples were measured using a surface area analyzer (ASAP-2420) from Micromeritics. Specifically, the pore size of the carbon-based particles was measured by measuring a maximum peak position in a Barrett-Joyner-Halenda (BJH) pore size distribution curve obtained from a nitrogen gas sorption isotherm of each sample obtained from Examples and Comparative Examples.

(2) Analysis of pair distribution function (PDF) for composite particles

A PDF analysis was performed on the composite particles according to Examples and Comparative Examples to obtain a PDF spectrum graph in which a vertical axis was a PDF function G(r) and a horizontal axis was r (Å) corresponding to an interatomic distance. Specifically, scattering data for the PDF analysis were collected from a beam line 1C of Pohang Light Source (PLS-II) of Pohang Accelerator Laboratory (PAL).
A sample of the composite particles was introduced into a capillary, and the scattering data including 2D scattering images was measured at a step size of 0.017 degree in a range of 5 to 80 degrees (2θ) using a high energy X-ray (22.003 KeV) with a wavelength (λ) of 0.56356 Å.
The 2D scattering images were integrated using a software (Dioptas) to obtain 1D scattering intensity data. In the process of obtaining the 1D scattering intensity data, a diffraction peak of the collector was planarized when the collector and the composite particles were adhered.
An X-ray scattered by the hollow capillary can be collected to obtain background data.
The 1D scattering intensity data, the background data, the used wavelength and the chemical composition were applied to a software (PDFgetX3) to obtain a structure function S(Q). In obtaining the S(Q), a relative intensity (background scale) of the background data compared to the 1D scattering intensity data was set to 1.0, and a range of Q was set to 0.1 to 12.0.
The S(Q) was Fourier transformed to obtain a G(r) function, and changes in G(r) according to the interatomic distance (r) was plotted to obtain the PDF spectrum.

A baseline was drawn to be parallel to the horizontal axis (r) based on a height of the vertical axis (G(r)) when r of the PDF spectrum was 0 Å, and then a central peak value of a peak having a maximum height in a range from 3.4 Å to 4.1 Å based on the baseline was derived as p3, and a central peak value of a peak having a maximum height in a range from 4.1 Å to 4.9 Å was derived as p4. A particle peak distance was calculated by substituting p3 and p4 into Equation 2.

The peak height of p3 was determined as Ip3, and the peak height of p4 was determined as Ip4. The Ip3 and Ip4 were substituted into Equation 3 to calculate the particle peak intensity ratio.

### (3) PDF analysis for anode

The lithium half-cell according to each of Examples and Comparative Examples was charged and discharged to 2.2 V, and then disassembled to obtain the anode active material layer. The anode active material layer was subjected to a PDF analysis to obtain a PDF spectrum graph in which the vertical axis was the PDF function G(r) and the horizontal axis is r (Å) corresponding to the interatomic distance.

Specifically, scattering data for the PDF analysis were collected from beamline 1C of Pohang Light Source (PLS-II) of Pohang Accelerator Laboratory (PAL).

The anode was fixed perpendicularly to an X-ray incident direction, and scattering data including 2D scattering images were measured using a high energy X-ray (22.003 KeV) having a wavelength ($\lambda$) of 0.56356 Å in a range from 5 to 80 degrees (2$\theta$) with a step size of 0.017 degrees.

The 2D scattering images were integrated using a software (Dioptas) to obtain 1D scattering intensity data. In the process of obtaining the 1D scattering intensity data, a diffraction peak of the collector was planarized when the collector and the composite particles were adhered.

An X-ray scattered in the atmosphere can be collected to obtain a background data.

A structure function S(Q) was obtained by applying the 1D scattering intensity data, the background data, the used wavelength used and the chemical composition to software (PDFgetX3). In obtaining the S(Q), a relative intensity (background scale) of the background data compared to the 1D scattering intensity data was set to 1.0, and a range of Q was set to 0.1 to 12.0.

The S(Q) was Fourier transformed to obtain the G(r) function, and the change in G(r) according to the interatomic distance (r) was plotted to obtain the PDF spectrum.

A baseline was drawn to be parallel to the horizontal axis (r) based on the lowest vertical axis (G(r)) height in a r range from 0 Å to 6 Å of the PDF spectrum. A central peak value of a peak having a maximum height in a range from 3.4 Å to 4.1 Å based on the baseline was derived as p1, and a central peak value of a peak having a maximum height in a range from 4.1 Å to 4.9 Å was derived as p2.

The maximum height of the peak in the range of 3.4 Å to 4.1 Å of the above PDF spectrum was designated as Ip1, and the maximum height of the peak in the range of 4.1 Å to 4.9 Å of the above PDF spectrum was designated as Ip2. An electrode peak intensity ratio was calculated by substituting Ip1 and Ip2 into Equation 1.

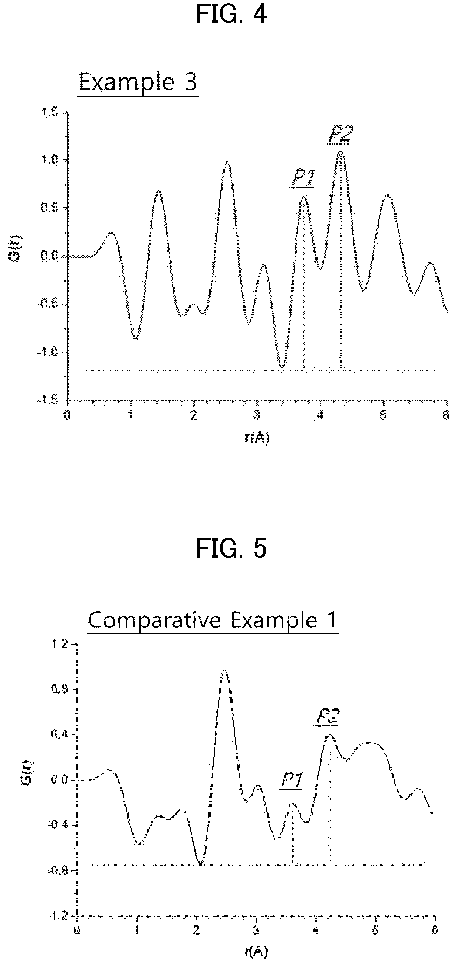

FIG. 4 is a pair distribution function (PDF) spectrum graph obtained by a PDF analysis of Example 3.

FIG. 5 is a PDF spectrum graph obtained by a PDF analysis of Comparative Example 1.

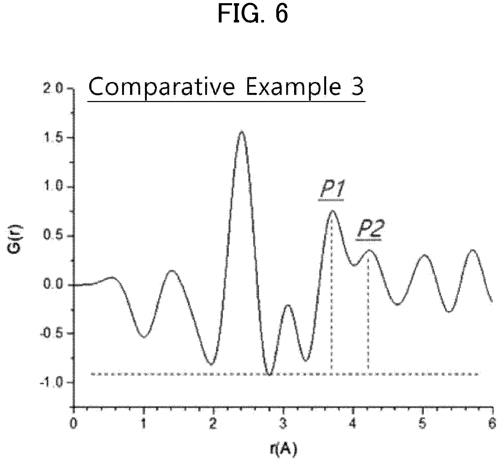

FIG. 6 is a PDF spectrum graph obtained by a PDF analysis of Comparative Example 3.

### (4) Measurement of DCIR (Direct Current Internal Resistance)

The lithium secondary battery according to each of Examples and Comparative Examples was charged (CC/CV 0.3C 4.2V 0.05C CUT-OFF) and discharged (CC 0.3C 2.5V CUT-OFF) twice at room temperature (25°C). Thereafter, the battery was discharged (CC 0.3C) from the charged state (CC/CV 0.3C 4.2V 0.05C CUT-OFF) to an SOC50% point, and a 10-second DCIR (mQ) at the SOC50% point was measured.

### (5) Measurement of capacity retention

The lithium half-cell according to Examples and Comparative Examples was charged (CC/CV 0.5C 0.01V 0.01C CUT-OFF) and discharged (CC 0.1C 3.0V CUT-OFF) by 50 cycles, and a capacity retention was evaluated as a percentage of a discharge capacity at the 50th cycle relative to a discharge capacity at the 1st cycle.

The results of the measurement and evaluation are shown in Tables 1 and 2 below. A composite particle content in Table 1 is the content of the composite particles based on a total weight of the anode active material layer. A conductive material column in Table 2 shows a type of the conductive material and the content of the conductive material based on a total weight of the anode active material layer.

[Table 1]

| | pore size (nm) | silane gas content (vol%) | particle peak distance (Å) | particle peak intensity ratio | composite particle content (wt%) |
|---|---|---|---|---|---|
| Example 1 | 1 | 50 | 0.58 | 0.24 | 15 |
| Example 2 | 1 | 70 | 0.56 | 0.16 | 15 |
| Example 3 | 1 | 10 | 0.57 | 0.13 | 15 |
| Example 4 | 1 | 50 | 0.59 | 0.28 | 15 |
| Example 5 | 11 | 50 | 0.58 | 0.29 | 15 |
| Example 6 | 3 | 60 | 0.54 | 0.08 | 15 |
| Example 7 | 10 | 15 | 0.55 | 0.37 | 15 |
| Example 8 | 1 | 50 | 0.55 | 0.11 | 5 |
| Example 9 | 1 | 50 | 0.60 | 0.34 | 10 |
| Example 10 | 1 | 50 | 0.57 | 0.25 | 30 |
| Example 11 | 1 | 50 | 0.56 | 0.35 | 40 |
| Example 12 | 1 | 50 | 0.59 | 0.10 | 40 |
| Example 13 | 1 | 50 | 0.53 | 0.22 | 3 |
| Example 14 | 1 | 50 | 0.58 | 0.30 | 45 |
| Comparative Example 1 | 20 | 50 | 0.61 | 0.50 | 15 |
| Comparative Example 2 | 100 | 50 | 0.62 | 0.62 | 15 |
| Comparative Example 3 | 1 | 50 | 0.59 | 0.33 | 50 |
| Comparative Example 4 | 1 | 50 | 0.54 | 0.25 | 75 |
| Comparative Example 5 | 1 | 50 | 0.63 | 1.33 | 0 |
| Comparative Example 6 | 1 | 50 | 0.57 | 0.20 | 40 |

[Table 2]

| | conductive material | electrode peak intensity ratio | DCIR (mΩ) | capacity retention (%, 50 cycles) |
|---|---|---|---|---|
| Example 1 | SWCNT 0.1 wt% | 2.13 | 4.34 | 95 |
| Example 2 | SWCNT 0.1 wt% | 2.15 | 3.91 | 95 |
| Example 3 | SWCNT 0.1 wt% | 1.46 | 3.98 | 89 |
| Example 4 | SWCNT 0.1 wt% | 2.30 | 4.15 | 96 |
| Example 5 | SWCNT 0.1 wt% | 1.52 | 4.01 | 89 |
| Example 6 | SWCNT 0.1 wt% | 1.12 | 3.92 | 86 |
| Example 7 | SWCNT 0.1 wt% | 2.69 | 4.71 | 86 |
| Example 8 | SWCNT 0.1 wt% | 2.64 | 4.64 | 99 |
| Example 9 | SWCNT 0.1 wt% | 2.38 | 4.46 | 96 |
| Example 10 | SWCNT 0.1 wt% | 1.50 | 3.91 | 91 |
| Example 11 | SWCNT 0.1 wt% | 1.17 | 3.85 | 92 |
| Example 12 | MWCNT 0.1 wt% | 1.10 | 4.04 | 89 |
| Example 13 | SWCNT 0.1 wt% | 2.46 | 4.68 | 96 |
| Example 14 | SWCNT 0.1 wt% | 1.15 | 4.41 | 86 |

(continued)

| | conductive material | electrode peak intensity ratio | DCIR (mΩ) | capacity retention (%, 50 cycles) |
|---|---|---|---|---|
| Comparative Example 1 | SWCNT 0.1 wt% | 2.72 | 4.95 | 75 |
| Comparative Example 2 | SWCNT 0.1 wt% | 2.89 | 4.54 | 60 |
| Comparative Example 3 | SWCNT 0.1 wt% | 0.89 | 3.75 | 79 |
| Comparative Example 4 | SWCNT 0.1 wt% | 0.50 | 3.69 | 63 |
| Comparative Example 5 | SWCNT 0.1 wt% | 2.86 | 5.42 | 98 |
| Comparative Example 6 | carbon black 5.0 wt% | 0.94 | 5.18 | 81 |

Referring to Tables 1 and 2, in Examples where the electrode peak intensity ratio according to Equation 1 was in a range from 1.1 to 2.7, the resistance was generally reduced and the capacity retention was improved compared to that from Comparative Examples.

The silicon contents based on the total weight of the composite particles were substantially similar in Examples and Comparative Examples in Examples and Comparative Examples, but the physical and life-span properties of the composite particles were measured as being different depending on the pore size and the silane gas concentration.

In Example 4 where the carbon coating was further formed on the silicon-containing coating, the capacity retention was improved compared to that from other Examples.

In Example 5 where the pore size of the carbon-based particles exceeded 10 nm, the capacity retention was lowered compared to that from other Examples.

In Examples 6 and 7 where the particle peak intensity ratio according to Equation 3 was not within a range of 0.1 to 0.35, the capacity retention was lowered compared to that from other Examples.

In Example 12 where SWCNT was not used as the conductive material, the capacity retention was lowered compared to that from other Examples.

In Example 13 where the content of composite particles based on the total weight of the anode active material layer was less than 5 wt%, the resistance increased compared to that from other Examples.

In Example 14 where the content of the composite particles based on the total weight of the anode active material layer was greater than 40 wt%, the capacity retention was decreased compared to that from other Examples.

**Claims**

1.  An anode for a lithium secondary battery, comprising:

    an anode current collector; and
    an anode active material layer disposed on at least one surface of the anode current collector, the anode active material layer comprising an anode active material and a conductive material,
    wherein an electrode peak intensity ratio of the anode active material layer defined by Equation 1 is in a range from 1.1 to 2.7:

$$[\text{Equation 1}]$$

$$\text{electrode peak intensity ratio} = Ip2/Ip1$$

    wherein, in Equation 1, Ip1 is a maximum height of a peak in a range of 3.4 Å to 4.1 Å of a pair distribution function (PDF) spectrum obtained by a PDF analysis of the anode active material layer, and Ip2 is a maximum height of a peak in a range of 4.1 Å to 4.9 Å of the PDF spectrum.

2.  The anode for a lithium secondary battery according to claim 1, wherein the electrode peak intensity ratio is in a range from 2.13 to 2.64.

3.  The anode for a lithium secondary battery according to any one of claims 1 and 2, wherein the anode active material comprises a composite particle that comprises:

a carbon-based particle including pores; and
a silicon-containing coating formed on a surface of the carbon-based particle.

4. The anode for a lithium secondary battery according to claim 3, wherein a particle peak distance of the composite particle defined by Equation 2 is 0.6 Å or less:

[Equation 2]

$$\text{particle peak distance (Å)} = p4\text{-}p3$$

wherein, in Equation 2, p3 is a central peak value of a peak having a maximum height in a range from 3.4 Å to 4.1 Å of the PDF spectrum obtained by the PDF analysis for the composite particle, and p4 is a central peak value of a peak having a maximum height in a range of 4.1 Å to 4.9 Å of the PDF spectrum obtained by the PDF analysis for the composite particle.

5. The anode for a lithium secondary battery according to claim 4, wherein the particle peak distance is in a range from 0.56 Å to 0.59 Å.

6. The anode for a lithium secondary battery according to any one of claims 3 to 5, wherein a particle peak intensity ratio of the composite particle defined by Equation 3 is in a range from 0.1 to 0.35:

[Equation 3]

$$\text{particle peak intensity ratio} = Ip4/Ip3$$

wherein, in Equation 3, Ip3 is a maximum height of a peak in a range from 3.4 Å to 4.1 Å of the PDF spectrum obtained by the PDF analysis for the composite particle, and Ip4 is a maximum height of a peak in a range from 4.1 Å to 4.9 Å of the PDF spectrum obtained by the PDF analysis for the composite particle.

7. The anode for a lithium secondary battery according to claim 6, wherein the particle peak intensity ratio is in a range from 0.15 to 0.28.

8. The anode for a lithium secondary battery according to any one of claims 3 to 7, wherein a pore size of the carbon-based particle is in a range from 0.1 nm to 10 nm.

9. The anode for a lithium secondary battery according to any one of claims 3 to 7, wherein a pore size of the carbon-based particle is in a range from 1 nm to 5 nm.

10. The anode for a lithium secondary battery according to any one claims 3 to 9, wherein the composite particle further comprises a carbon coating formed on the silicon-containing coating.

11. The anode for a lithium secondary battery according to any one of claims 3 to 10, wherein a content of the composite particle is in a range from 5 wt% to 40 wt% based on a total weight of the anode active material layer.

12. The anode for a lithium secondary battery according to any one of claims 3 to 10, wherein a content of the composite particle is in a range from 10 wt% to 30 wt% based on a total weight of the anode active material layer.

13. The anode for a lithium secondary battery according to any one of claims 3 to 12, wherein the anode active material further comprises a graphite-based active material comprising at least one selected from the group consisting of artificial graphite and natural graphite.

14. The anode for a lithium secondary battery according to any one of claims 1 to 13, wherein the conductive material comprises a single-walled carbon nanotube (SWCNT).

15. A lithium secondary battery, comprising:

the anode for a lithium secondary battery of any one of claims 1 to 14; and a cathode facing the anode.

FIG. 1

# FIG. 2

# FIG. 3

# FIG. 4

## Example 3

# FIG. 5

## Comparative Example 1

FIG. 6